# EUROPÄISCHE PATENTANMELDUNG

(11) **EP 1 757 485 A1**
(43) Veröffentlichungstag der Anmeldung: **28.02.2007**
(21) Anmeldenummer: 06014639.6
(22) Anmeldetag: 14.07.2006
(51) Int. Cl.: B60Q 1/08, B60Q 1/10

(54) **Verfahren zur Steuerung der Leuchtweite der Scheinwerfer eines Kraftfahrzeuges**

(30) Priorität: 24.08.2005 DE 102005039905; 04.04.2006 DE 102006016073
(71) Anmelder: Dr.Ing. h.c.F. Porsche Aktiengesellschaft, 70435 Stuttgart (DE)
(72) Erfinder: Eberhardt, Stefan, 71522 Backnang (DE)

(57) **Zusammenfassung**

Es wird ein Verfahren zur verkehrsabhängigen Leuchtweitenregulierung für Scheinwerfer in Kraftfahrzeugen, wobei mindestens zwei Bilderfassungseinheiten (K1,K2) vorgesehen sind, deren Bilder an eine Steuereinheit (SG-Sch) zur Auswertung weitergeleitet werden, vorgeschlagen. Eine ist eine Ansteuereinheit zur Ansteuerung der Leuchtweite der Scheinwerfer (Sch-Re,Sch-Li) vorgesehen, und aufgrund der erfassten Bilder der beiden Bilderfassungseinheiten (K1,K2) wird eine Klassifizierung der Lichtquelle außerhalb des Fahrzeugs vorgenommen indem zwischen entgegenkommenden, stehenden und sich entfernenden Lichtquellen unterschieden wird. Anhand dieser Klassifizierung wird die Leuchtweite des Scheinwerfers eingestellt.

## Beschreibung

Die Erfindung geht aus von einer Einrichtung zur Anpassung des Beleuchtungssystems an einem Kraftfahrzeug, wie es beispielsweise aus der DE 199 020 15 A1 bekannt ist. Bei dieser bekannten Einrichtung sind eine Bilderfassungseinrichtung und eine Bildauswerteeinrichtung vorgesehen, wobei aufgrund der erfassten Bilder mittels einer Verstelleinrichtung das Beleuchtungssystem angesteuert wird.

Von dieser bekannten Einrichtung ausgehend war es die Aufgabe der vorliegenden Erfindung, ein Verfahren zur Verfügung zu stellen, das noch besser auf verkehrsbedingte Veränderungen reagiert und die Leuchtweite der Scheinwerfer eines Kraftfahrzeuges und/oder die Form des Lichtkegels so ansteuert, dass der Fahrer eine optimale Ausleuchtung des Bereichs vor seinem Fahrzeug erhält, ohne gleichzeitig den Gegenverkehr zu blenden.

Das erfindungsgemäße Verfahren zur verkehrsabhängigen Leuchtweitenregulierung nutzt gegenüber dem bekannten Stand der Technik die Bilder von zumindest zwei Kameras, die im Gegensatz zu einer einzelnen Kamera als Stereo-Kamera zusammenwirken und es ermöglichen, ein räumliches Bild darzustellen. Dadurch lassen sich vorteilhafterweise die Position verschiedener Lichtquellen im Bereich außerhalb des Fahrzeuges besser zuordnen und ihr Abstand zum eigenen Fahrzeug und untereinander besser bestimmen.

Ebenso kann die Information, die aus der Auswertung der Kamerabilder gewonnen wird, nicht nur zum Einstellen der Leuchtweite genutzt werden, sondern die Daten sind für weitere Assistenzfunktionen im Fahrzeug auswertbar. So kann beispielsweise anhand der Erkennung des Fahrbahnverlaufs und/oder des Zustandes der Fahrbahnoberfläche eine Geschwindigkeitswarnung vorgenommen werden. Des Weiteren besteht die Möglichkeit, dass diese Informationen von einem zugehörigen Steuergerät für eine Anpassung des Fahrverhaltens an die aktuellen Bedingungen ausgewertet werden. So kann die Motor- und/oder Getriebesteuerung, die Fahrwerkseinstellung und die Fahrdynamikregelung beispielsweise an Unebenheiten und Nässe der Fahrbahn angepasst werden.

Die Erfassung von Objekten und die Bestimmung der Objektposition hat den Vorteil, dass anhand der erfassten Objekte der Straßenverlauf noch definierter erkannt wird und dass die Relativbewegung der Objekte zum eigenen Fahrzeug darstellbar ist. Dies wiederum ermöglicht es, verschiedene weitere Funktionen wie beispielsweise den aktiven Fußgängerschutz, der Fernlichtautomatik oder des Begegnungslichtes zu aktivieren.

Die Auswertung der Kamerabilder ermöglicht es neben der Objekterkennung über das erfasste Licht, ebenso Rückschlüsse auf die Lichtverhältnisse und der Sichtweite zu ziehen. Dies wiederum kann zur Aktivierung des Regensensors, der Nebelschlussleuchte und des Nebelschlusslichtes genutzt werden.

Die Auswertung der Bilder von zumindest zwei Kameras hat weiterhin den Vorteil, dass die erfassten Bilder der Kameras auf Plausibilität geprüft werden können und dass der Ausfall einer Kamera nicht zu einem generellen Abschalten der Leuchtweitenregulierung führen muss, sondern auf eine Notsteuerung umgeschaltet werden kann.

Durch die weiteren Merkmale ergeben sich vorteilhafte Weiterbildungen und Ausgestaltungen der erfindungsgemäßen verkehrsabhängigen Leuchtweitenregulierung. So hat die Erfassung verschiedener Bedingungen um und am Fahrzeug den Vorteil, dass die verschiedenen Faktoren, an die die Leuchtweite der Scheinwerfer angepasst werden soll, in verschieden Prioritätsstufen eingeteilt werden können und dem Verfahren damit je nach Anforderung eine Prioritätenliste zur Wichtung der verschiedenen auszuwertenden Größen zugrunde gelegt werden kann.

Ein weiterer Vorteil ergibt sich dadurch, dass durch die kontinuierliche Bilderfassung die Scheinwerfersteuerung immer an die aktuell vorliegenden Bedingungen anpassbar ist.

Das erfindungsgemäße Verfahren ist in den Ausführungsbeispielen dargestellt und in der nachfolgenden Beschreibung näher erläutert.

Es zeigen
- Figur 1: eine Prinzipdarstellung der Anordnung zur Durchführung des erfindungsgemäßen Verfahrens und
- Figur 2: den Programmablaufplan zur verkehrsabhängigen Leuchtweitenregulierung
- Figur 3: den Abschnitt 16 der Lichtquellenidentifikation des Programmablaufplanes aus Figur 2
- Figur 4: den Abschnitt 17 der Stellgrößenbestimmung der Leuchtweitenregelung des Programmablaufplanes aus Figur 2 und
- Figur 5: den Zusammenhang von Geschwindigkeiten und Leuchtweite

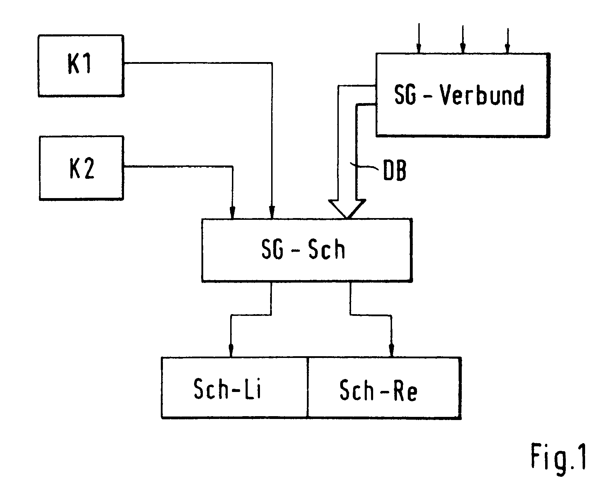

Figur 1 zeigt lediglich einen möglichen Aufbau der Anordnung zur Durchführung des erfindungsgemäßen Verfahrens. Hierbei sind zwei Kameras K1 und K2 vorgesehen, deren Bilder an ein Scheinwerfersteuergerät SG-Sch geleitet werden. Diesem Scheinwerfersteuergerät SG-Sch sind außerdem die weiteren in anderen Steuergeräten erfassten und ausgewerteten Daten, wie die beispielsweise Geschwindigkeit des Fahrzeuges zugeführt. Diese weiteren Steuergeräte stellen einen Steuergeräteverbund dar, der seine Daten zum Beispiel über einen Datenbus DB untereinander austauscht. Das Scheinwerfersteuergerät wertet die ihm zugeführten Daten gemeinsam mit den von den Kameras gelieferten Bildern aus und steuert die Leuchtweite der Schweinwerfer, wobei der reche Scheinwerfer Sch-Re unabhängig vom linken Scheinwerfer Sch-Li angesteuert werden kann und auch beide Scheinwerfer gemeinsam in ihrer Leuchtweite regelbar sind.

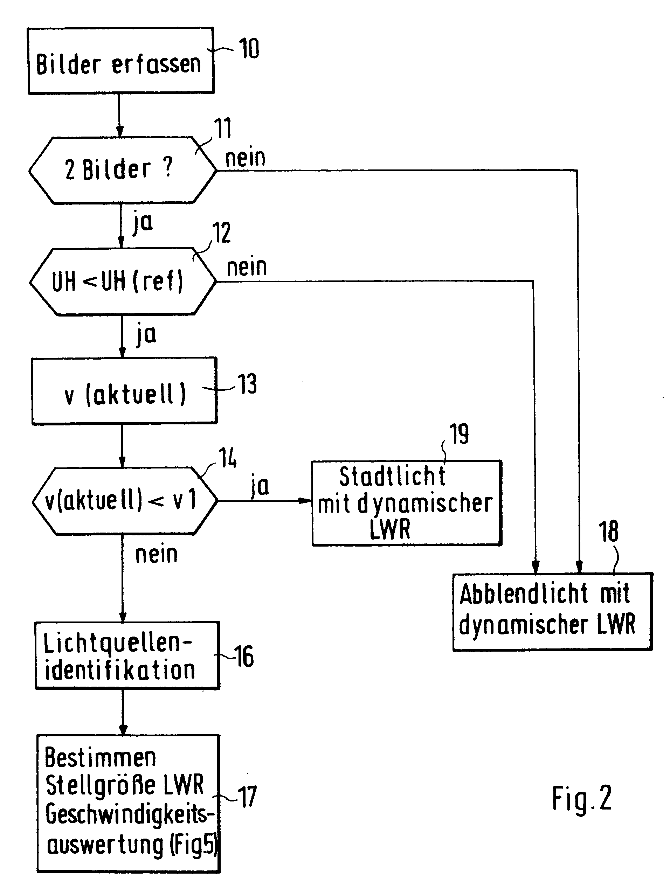

Bei dem erfindungsgemäßen Verfahren gemäß Figur 2 werden die Bilder der zumindest zwei Kameras in einem ersten Schritt 10 erfasst und anschließend im Schritt 11 geprüft, ob beide Kameras Bilder liefern. Wenn beide Kameras ein Bild in das Verfahren einspeisen, führt der Ja Ausgang der Abfrage im Schritt 11 zu einem Schritt 12, in welchem die Umgebungshelligkeit des Fahrzeuges erfasst und mit einem vorgebbarem Referenzwert verglichen wird. Dieser vorgebbare Referenzwert ist so festgelegt, dass oberhalb dieses Wertes die Sichtweite aufgrund von natürlicher oder öffentlicher Beleuchtung bereits so gut ist, dass keine verkehrsabhängige Leuchtweitenregelung des Scheinwerfers erfolgen muss. Damit führt der Ja - Ausgang auf die Frage im Schritt 12, ob die Umgebungshelligkeit kleiner als der vorgebbare Referenzwert ist, zu einem Arbeitsschritt 13.
Wurde die Abfrage 12 mit Nein beantwortet, so wird im Schritt 18 das Abblendlicht mit dynamischer Leuchtweitenregelung aktiviert. Die dynamische Leuchtweitenregulierung erfasst und verarbeitet lediglich die im Fahrzeug vorliegenden Informationen, wie Geschwindigkeit, Ladezustand und Neigung des Fahrzeuges um die Leuchtweite der Scheinwerfer anzupassen.
Im Schritt 13 wird die aktuelle Geschwindigkeit v(aktuell) des Fahrzeuges erfasst. Dieser Wert ist im Fahrzeug bereits bekannt und muss lediglich dem Steuergerät für die verkehrsabhängige Leuchtweitenregelung zur Verfügung gestellt werden, was beispielsweise über einen Datenbus im Fahrzeug erfolgen kann.

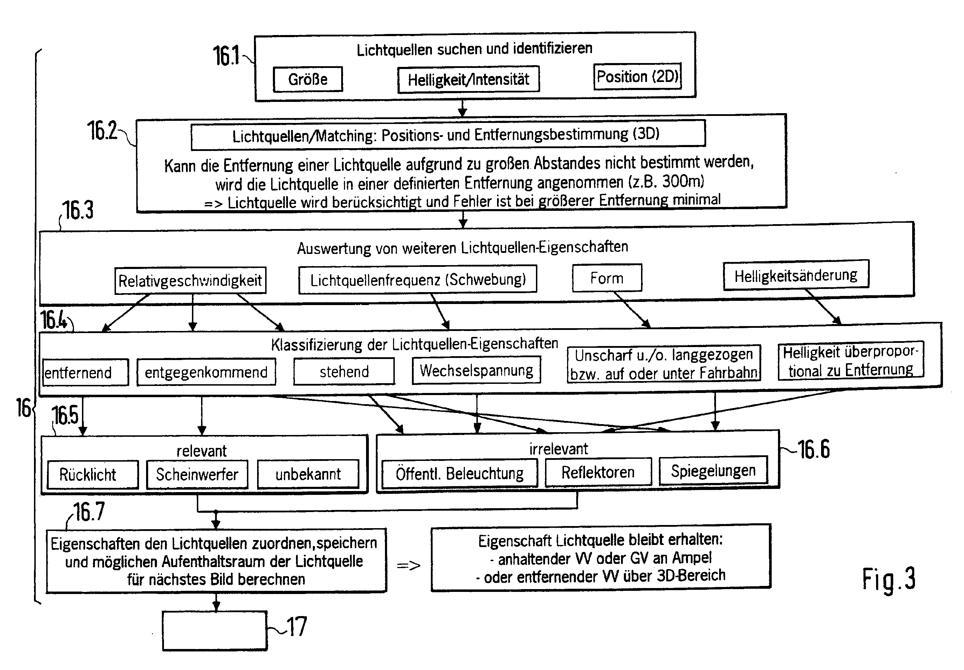

Nach dem Erfassen der aktuellen Geschwindigkeit des Fahrzeuges im Schritt 13 wird nachfolgend in einer ersten Vergleichsstufe 14 die aktuelle Geschwindigkeit v(aktuell) mit einem ersten Referenzwert v1 verglichen. Dieser Wert v1 ist eine relativ geringe Geschwindigkeit, wobei sich der Wert von 40 km/h als eine mögliche Richtgröße in der Applikation bewährt hat. Die erste Geschwindigkeitsschwelle v1 wurde festgelegt, um die Reichweite dann zu reduzieren, wenn die Blendung anderer Verkehrsteilnehmer geringfügig gehalten werden soll. Ist die aktuelle Geschwindigkeit kleiner als dieser erste Referenzwert v(aktuell) < v1, wird die Reichwerte der Scheinwerfer reduziert, indem im Schritt 19 auf einen Stadtlicht Modus, der durch die dynamische Leuchtweitenregelung ergänzt werden kann, umgeschaltet wird. Ist die aktuelle Geschwindigkeit größer als der erste Referenzwert v1, wird die Vergleichsstufe 14 mit Nein beantwortet.
So sind die Bedingungen für eine verkehrsabhängige Leuchtweitenregelung VLWR gegeben und im Schritt 16 erfolgt eine Lichtquellenidentifikation. Diese Lichtquellenidentifikation 16 ist in der Figur 3 ausführlich dargestellt und wird weiter unten noch erläutert.

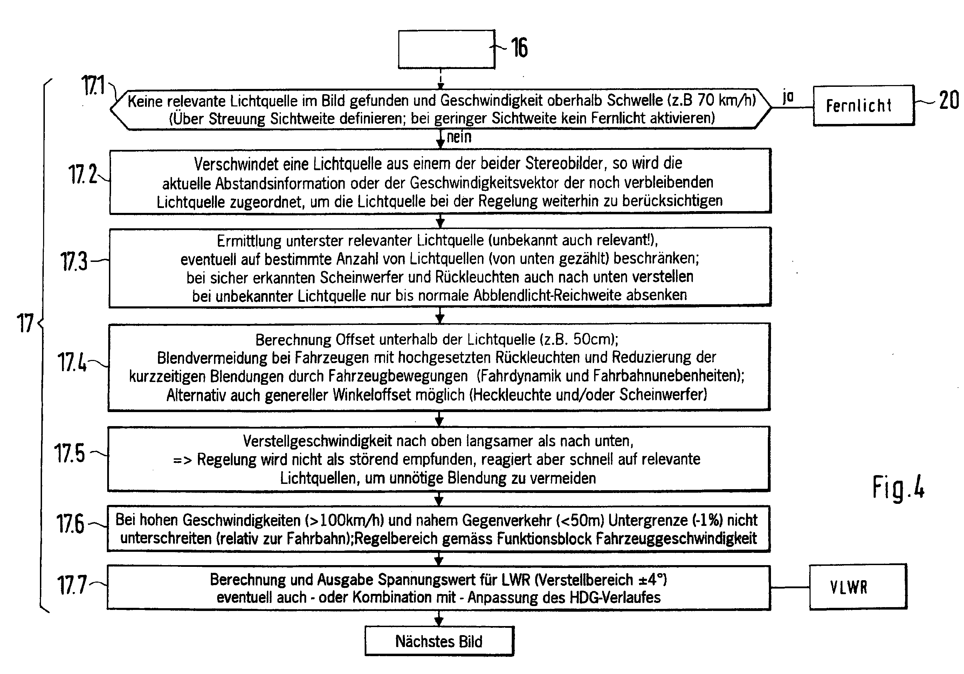

Nach der Bestimmung und Identifikation der Lichtquellen im Schritt 16 erfolgt im Schritt 17 die Bestimmung der einzustellenden Leuchtweite. Dies ist separat in Figur 4 dargestellt.

Die Bewertung, Einteilung und Zuordnung der erfassten Lichtquellen wird für die verkehrsabhängige Leuchtweitenregelung durchgeführt, was in der Figur 2 symbolisch durch den Verfahrensschritt 16 dargestellt ist und in der Figur 3 detailliert ausgeführt ist.

Die Lichtquellenidentifikation 16 beginnt mit dem Punkt 16.1, wobei zunächst die Lichtquellen gesucht und nach Größe und Helligkeit bestimmt werden. Mit diesen Informationen aus beiden Kameras kann im Punkt 16.2 ein dreidimensionales Bild generiert und eine Position- und Entfernungsbestimmung durchgeführt werden. Kann die Lichtquelle aufgrund eines zu großen Abstandes nicht bestimmt werden, wird der Lichtquelle eine definierte Entfernung zugeordnet, so dass die Lichtquelle aber in jedem Fall für die weitere Auswertung berücksichtigt wird.
Bei der Bewertung der Bilder der zumindest zwei Kameras werden im zugehörigen Steuergerät bestimmte Bedingungen und mögliche Fallbeispiele hinterlegt, so dass bei der Generierung des räumlichen Bildes und der Auswertung der erfassten Objekte keine Fehlinterpretation auftritt.

Nach der Identifizierung und Positionsbestimmung der Lichtquellen werden die Eigenschaften der Lichtquelleneigenschaften wie beispielsweise die Relativgeschwindigkeit, mit der sich die Lichtquelle in Bezug auf die Fahrbahn bewegt, die Lichtquellenfrequenz , die Form der Lichtquelle und eine eventuelle Helligkeit bzw. Helligkeitsänderung bewertet. Dies ist im Punkt 16.3 gezeigt.

Diese Bewertung der Lichtquelleneigenschaften ermöglicht anschließend im Punkt 16.4 eine Einordnung der erfassten Lichtquelle und die Unterscheidung nach
- einer sich entfernenden Lichtquelle,
- einer entgegenkommenden Lichtquelle,
- einer stehenden Lichtquelle,
- einer Lichtquelle, die mit Wechselspannung betrieben wird und
- ob die Konturen der Lichtquelle unscharf oder
- in welchem Verhältnis die Helligkeit zur Entfernung der Lichtquelle steht.

Mit diesen Informationen wird eine Zuordnung der externen Lichtquelle vorgenommen.
Die Übersicht gibt mögliche Zuordnungen und deren Einteilung zur den ausgewerteten Lichtquellen-Eigenschaften in Punkt 16.4.

| | |
|---|---|
| sich entfernende Lichtquelle | → Rücklicht |
| entgegenkommende Lichtquelle | → Scheinwerfer oder Spiegelungen |
| stehende Lichtquelle | → öffentliche Beleuchtung oder stehendes Fahrzeug |
| Licht mit Wechselspannung | → öffentliche Beleuchtung und |
| unscharfe Kontur | → Spiegelungen |

Diese Zuordnungen und Bestimmung der Lichtquellen erlaubt ihre Zuordnung in relevante 16.5 und irrelevante Lichtquellen 16.6 der Figur 3 gezeigt ist.

Letztendlich werden bei der Lichtquellenidentifikation nach der Auswertung und damit im Punkt 16.7 die Eigenschaften der erfassten Lichtquelle wie der Ort gespeichert und mit dem im nächsten erfassten Bild bestimmten Lichtquellen verglichen wird. Dies erlaubt es, Veränderungen der Position einer erfassten Lichtquelle zu bestimmen und kurzzeitig verschwindende Lichtquellen für die Regelung zu berücksichtigen. Bleibt das Fahrzeug, welches beispielsweise aufgrund einer erfassten Lichtquelle identifiziert wurde beispielsweise stehen, so bleibt die Eigenschaft der Lichtquelle zugeordnet und es wird nicht auf eine Fahrbahnbeleuchtung geschlossen, sondern weiterhin als Fahrzeug eines Vorausfahrenden Verkehrs W oder eines Gegenverkehrs GV erkannt.

Nach der Lichtquellenidentifikation in Figur 3 wird, wie in Figur 2 im Programmablaufplan dargestellt, mit dem Schritt 17 die Bestimmung der Stellgrößen für die Leuchtweitenregelung durchgeführt. Dies ist detailliert und separat in Figur 4 gezeigt.

Zunächst wird im Punkt 17.1. geprüft, ob ggf. keine relevante Lichtquelle ermittelt wurde und die Geschwindigkeit des Fahrzeuges oberhalb einer vorgebbaren Schwelle liegt. Ist dies der Fall, wird das Fernlicht 20 eingeschaltet.

Ist eine der eben genannten Bedingungen nicht gegeben, wird im Punkt 17.2 geprüft, ob eine Lichtquelle aus einem der beiden Kamerabilder verschwindet. Ist dies der Fall, dann wird die zuletzt vorhandene Abstandsinformation oder der Geschwindigkeitsvektor der noch verbleibenden Lichtquelle zugeordnet, um die Lichtquelle bei der Regelung weiterhin zu berücksichtigen.

Im Punkt 17.3 wird die unterste relevante Lichtquelle bestimmt und entsprechend der Höhe dieser Lichtquelle eine Absenkung der Leuchtweite vorgenommen. Hier ist es denkbar, dass eine Einstellung nicht unter die vorhandene Abblendlicht- Reichweite erfolgt, wenn die Lichtquelle sicher als Rücklicht oder Scheinwerfer erkannt ist.

Bei der Anpassung der Helligkeitsgrenze des Scheinwerfers an ein erfasstes Rücklicht im Punkt 17.4 ist es sinnvoll, den Lichtkegel des Scheinwerfers um einen definierten Abstand in Bezug auf die erfasste Lichtquelle nach unten abzusenken, wobei dieser definierte Abstand auch als Winkel Offset festgelegt werden. So wird vermieden, dass der Fahrer eines vorausfahrenden Fahrzeuges (Vorausverkehr W), welches ein hochgesetztes Rücklicht hat, oder eines entgegenkommenden Fahrzeuges (Gegenverkehr GV) geblendet wird. Ebenso wird das Risiko einer kurzzeitigen Blendwirkung bei Fahrbahnunebenheiten minimiert.

Im Punkte 17.5 der Bestimmung der Stellgröße für die Leuchtweitenregelung ist ausgeführt, dass die Verstellgeschwindigkeit beim Anheben des Lichtkegels langsamer sein kann als beim Absenken des Lichtkegels, wodurch die Verstellung des Lichtkegels in der Regel als harmonisch angenehm empfunden wird, aber gleichzeitig die Blendwirkung schneller entgegengewirkt wird.

Anschließend wird im Schritt oder Punkt 17.6 eine minimale Untergrenze für den Lichtkegel festgelegt, wenn die Geschwindigkeit des Fahrzeuges einen vorgebbaren hohen Geschwindigkeitswert überschreitet und Gegenverkehr in geringem Abstand erkannt wird.

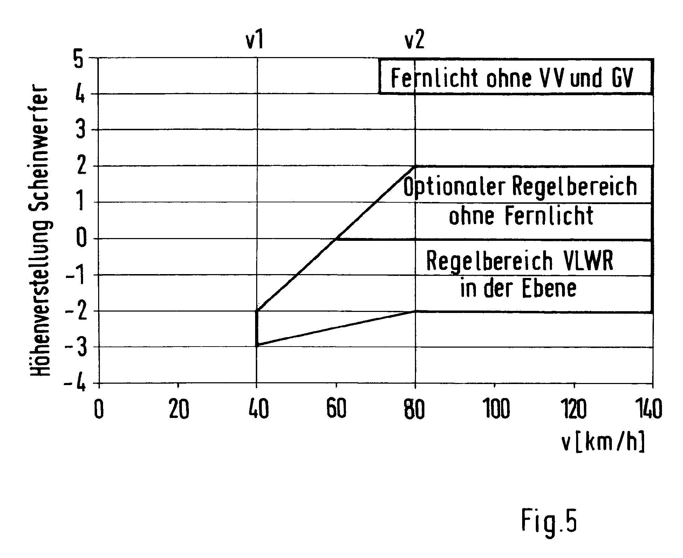

Hierbei ist der Einfluss der Geschwindigkeit für die Berechnung wesentlich und daher nochmals in Figur 5 separat dargestellt.

Nach der Fallunterscheidung und Bestimmung verschiedener Parameter aus den vorangegangenen Punkten wird nun im Schritt 17.7 der Wert für die Einstellung des Scheinwerfers berechnet und an die Stelleinheit zur Einstellung der verkehrsabhängigen Leuchtweitenregelung (VLWR) ausgegeben.

Die Figur 5 zeigt die Höhenverstellung des Scheinwerfers in Abhängigkeit der Fahrzeuggeschwindigkeit, wobei die erste vorgebbare Referenzgeschwindigkeit v1 hier auf den Wert 40 km/h gesetzt ist und eine zweite vorgebbare Referenzgeschwindigkeit v2 80 km/h beträgt. Wie dieser Figur 5 zu entnehmen, beginnt die Leuchtweitenregelung erst mit Erreichen des ersten vorgebbaren Referenzwertes v1. Oberhalb dieses ersten Referenzwertes gibt es einen ersten Bereich, in welchem sich der Regelbereich der verkehrsabhängigen Leuchtweiteneinstellung in der Ebene und damit im Wesentlichen direkt unterhalb der Ruhestellung oder Nullstellung befindet.
Daran schließt sich ein Regelbereich an, welcher ohne Fernlichtzuschaltung der Leuchtbereich des Abblendlichtes optimal an die erfassten Lichtquellen und damit den erkannten Objekten zugeordnet ist.

Bei hohen Geschwindigkeiten, wenn eine Ausleuchtung mittels der verkehrsabhängigen Leuchtweitenregelung des Abblendlichtes nicht ausreichend ist, wird das Fernlicht zugeschaltet.
Im Geschwindigkeitsbereich zwischen dem ersten und dem zweiten vorgebbaren Referenzwert ist die Leuchtweite für alle Fälle zunächst geringer und nimmt zu mit steigender Geschwindigkeit, während die Leuchtweite oberhalb der Geschwindigkeit v2 ja nach Einstellbereich eine konstante Größe hat.

Letztendlich sei noch erwähnt, dass die Daten und Bilder der Kameras, die sowohl bei Tageslicht als auch bei Dunkelheit einsetzbar sind, für weitere unterschiedlichste Anwendungen genutzt werden können.

Denkbar ist der Einsatz für die Abstandskontrolle, für Presafe- und Prechrash- Funktionen, die Erkennung von Verkehrsschildern oder die Ansteuerung der Klimasteuerung.

Der Fahrkomfort und sicherheitsrelevante Systeme sind anhand der Bilder der Kameras noch besser nutzbar.

## Patentansprüche

1. Verfahren zur verkehrsabhängigen Leuchtweitenregulierung für Scheinwerfer in Kraftfahrzeugen, wobei mindestens zwei Bilderfassungseinheiten vorgesehen sind, deren Bilder an eine Steuereinheit zur Auswertung weitergeleitet werden, wobei eine Ansteuereinheit zur Ansteuerung der Leuchtweite der Scheinwerfer und/oder der Form der Ausleuchtung vorgesehen ist, und wobei aufgrund der erfassten Bilder der beiden Bilderfassungseinheiten eine Klassifizierung der Lichtquelle außerhalb des Fahrzeugs dahingehend erfolgt, dass zwischen relevanten und nichtrelevanten Lichtquellen unterschieden wird, wobei aufgrund dieser vorliegenden Information die Leuchtweitenregulierung und/oder Form der Ausleuchtung des Scheinwerfers angepasst und der Scheinwerfer entsprechend angesteuert wird.

2. Verfahren nach Anspruch 1, **dadurch gekennzeichnet, dass** die verkehrsabhängige Leuchtweitenregelung nur bei Vorliegen von Bildern von zumindest zwei Kameras, unterhalb einer vorgebbaren Umgebungshelligkeit und erst ab einer vorgebbaren Geschwindigkeit durchgeführt wird und für den Fall, dass diese Bedingungen nicht erfüllt sind, eine dynamische Leuchtweitenregulierung, die sich lediglich auf die im Fahrzeug vorliegenden Parameter bezieht, durchgeführt wird.

3. Verfahren nach Anspruch 1, **dadurch gekennzeichnet, dass** bei den erfassten Lichtquellen zwischen öffentlicher Beleuchtung, Reflektoren, Spiegelungen, unbekannter Beleuchtung, Scheinwerfern und Rückleuchten unterschieden wird und die Scheinwerfer, die Rückleuchten und die unbekannten Lichtquellen eine relevante Lichtquelle für die verkehrsabhängige Leuchtweitenregelung sind.

4. Verfahren nach Anspruch 3, **dadurch gekennzeichnet, dass** nach dem Erkennen mehrerer Lichtquellen der oder die Scheinwerfer auf die unterste als relevant erkannte Lichtquelle eingestellt werden.
